# EUROPEAN PATENT APPLICATION

(11) **EP 1 201 402 A2**
(43) Date of publication of application: **02.05.2002**
(21) Application number: 01308991.7
(22) Date of filing: 23.10.2001
(51) Int. Cl.: B29C 65/34

(54) **Electrofusible units**

(30) Priority: 31.10.2000 GB 0026548
(71) Applicant: Fusion Group (Holdings) Plc, Chesterfield S40 9PZ (GB)
(72) Inventor: Bridgstock, Eric, Hope, Sheffield S30 2RF (GB); Barker, Carl William, Chesterfield, Derbyshire S41 0PR (GB)
(74) Representative: Houghton, David

(57) **Abstract**

Jointing systems for plastics pipes are known where electrofusion is employed to create a welded joint between two pipe ends. Conventional electrofusion units work well on pipes of small diameter, below 400mm, but with larger diameters difficulties arise. The invention seeks to overcome difficulties of joining large diameter pipes, an objective met by a jointing system comprising a strip (2) of plastics material wound with a resistance wire (3), and a containment strip (4) of a compatible plastics material. Both of the wound strip (2) and the containment strip (4) can have a tightening means such that with the wound strip (2) wrapped around a pipe joint, and the containment strip (4) wrapped around the wound strip (2), both can be tightened onto the pipe (1) ends at the position of the joint. Once fusion has taken place, the wound strip (2) and the containment strip (4) are welded together onto the pipe (1) ends to create a sealed joint in the form of a hoop of high strength.

## Description

This invention relates to electrofusible units particularly, but not necessarily exclusively for the connection of large diameter plastics, eg polyethylene pipes.

There is a growing employment of plastics pipes, eg in relatively low pressure systems, which hitherto have used pipes of rigid materials, for example concrete or cast iron. Considerable attention has been given to the problem of jointing large diameter plastics pipes. It is generally accepted that a welded or fused joint is superior to other forms of jointing, such as for example rubber ring joints, for pipes up to 400mm diameter, but larger sizes have proved to be difficult because of the problems of dimensional control during both manufacture and installation. One result of this is that relatively conventional electrofusion sockets that exist for pipes below 400mm, when increased in size to more than 400mm, involve a marked increase in cost to levels not acceptable in many low pressure systems for which large diameter pipes are ideally suited. Other difficulties involved in the jointing of large diameter pipes are variations in pipe diameter from a nominal diameter and degrees of ovality that are difficult to eliminate during their manufacture, and problems of alignment between two pipes on site.

An objective of the invention is to provide a means of jointing, in particular, large diameter pipes, that attends to those difficulties mentioned above.

According to a first aspect of the present invention, a jointing system for plastics pipes comprises a strip of plastics material wound with a resistence wire, and a containment strip of a compatible material. Preferably, the resistance wire is coated with a compatible plastics material or is lacquered to assist in the prevention of a short circuit between the windings of wire. Further preferably the ends of the wound plastics strip, connect to each other after the manner of a strap, to allow the wound strip to be fixed firmly around a pipe joint, and similarly, the ends of the containment strip connect to each other after the manner of a strap to allow the containment strip to be tightened around the wound strip.

One form of construction that combines simplicity, low cost and ensures a tight and substantially immovable joint of both the wound strip and the containment strip, is to provide a plastics band clamp looped through respective holes in the adjacent ends of the respective wound strip and containment strip, that can be acted on by a conventional banding clamp tool to draw the wound strip ends and the containment strip end together.

Thus, two pipe ends can be located in butting contact, and a wound strip wrapped round the joint and tightened in place by the band clamps, with the trailing ends of the coated wire winding left loose for connection to a source of power. The containment strip is then wrapped around the wound strip and tightened in place by band clamps and/or another appropriate strap tightening means eg a ratchet tensioned material strap. With the coated wire ends connected to a power source, and power supplied to the winding, the strip on which it is wound fuses to the outer periphery of the pipe to both sides of the joint centre, and at the same time, the outer surface of the wound strip fuses to the inner surface of the containment strip.

As a means of further ensuring that the assembly of wound strip and containment strip are held firmly in place around abutting pipe ends, an outer wrapping of a flexible, heat-resistant material can be provided, the ends of which are releasably connected by a means to enable the outer wrapping to be tightened around the assembly of wound strip and containment strip. Thus one or more belts can pass through respective fixators on the ends of the outer wrapping or a ratcheting mechanism can be provided on one end to be engaged by the other end of the outer wrapping, to enable the outer wrapping to be tightened onto the assembly of wound strip and containment strip to ensure intimate contact between the wound strip and the pipe ends, and the containment strip and wound strip during the application of current.

The result is a relatively low cost and yet effective joint for pipes particularly pipes of large diameter, ie 400mm and greater. The wound strip acts as a bandage, ensuring intimate contact with the pipe ends around substantially their entire periphery, assisting considerably the overcoming of problems due to diameter variation and ovality and the presence of ridges around the pipe circumferences, as is frequently so on large diameter pipes.

Other advantages are to be found, such as the provision of a substantial guarantee that the heating wire coils are kept in contact with plastics material and prevented from overheating or expanding out of control following the application of current. By thermally bonding the containment strip to the wound strip, and the wound strip to the outer periphery of the pipe ends, there is created a rigid hoop, which will be able to withstand both internal and external stresses that may be applied to the joint during subsequent use.

To allow the ends of the wound strip to be drawn into close and perhaps abutting relationship, and as a positive location of the ends of the wound strip is of assistance, a tongue and slot connection may be provided at the abutting ends of the wound strip. A similar tongue and groove connection may be provided at the abutting ends of the containment strip, but preferably, one end of the containment strip is reduced in thickness to lie over, or be overlaid by the other end of the containment strip, to ensure that the wire winding on the wound strip is totally encased.

With a tongue and groove connection between the ends of the wound strip, there is first the possibility of a short circuit occurring at the abutting ends of the wound strip. Additionally, with large diameters, a considerable length of wire winding is employed, requiring high power to ensure an adequate heating effect over its full length. The length of winding may also be such as to preclude the use of conventional copper winding.

A second object of the invention is to avoid the difficulties mentioned above.

According to a second embodiment of the invention, a wound strip comprises a plastics strip, and two wire windings on the strip, one extending from a connection at the approximate mid-length of the strip to a connection at on end of the strip, and a second connection at the approximate mid-length of the strip to a connection at the other end of the strip. Preferably, the wire of the windings is a coated wire or is lacquered.

Thus by separately connecting each coated wire winding to a common source of power, the result is that the potential difference between the windings at ends of the wound strip is substantially zero, eliminating any realistic possibility of a short circuit. In addition, the shortening of the length of the coil, allows each to be formed from relatively low cost conventional copper wire, with substantially no variation in resistance along each winding.

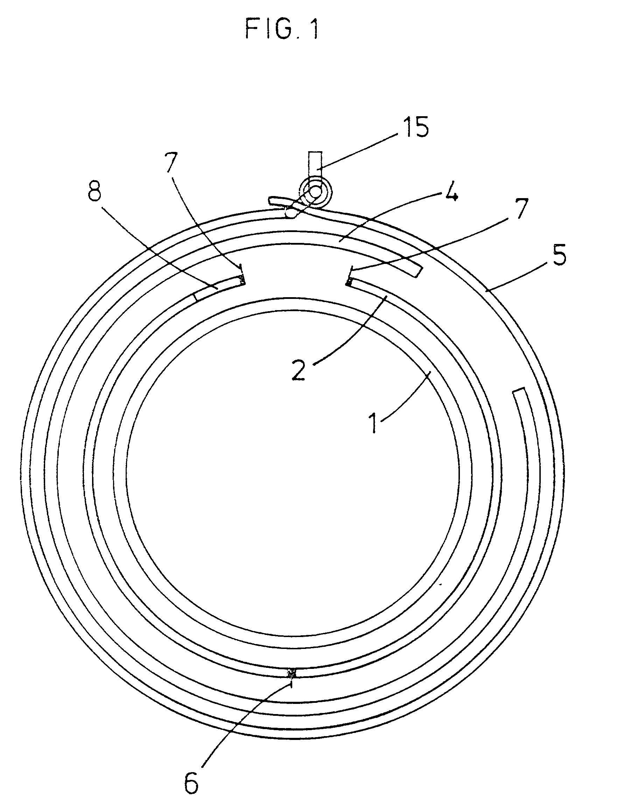

One embodiment of the invention will now be described with reference to the accompanying drawings, in which Figure 1 is a schematic, exploded sectional view of a jointing system for plastic pipes;
Figure 2 is a perspective view of a wound strip for use in the system of Figure 1;
Figure 3 is a schematic sectional view of a containment strip for use in the system of Figure 1;
Figure 4 is a plan view of Part of Figure 3;
Figure 5 is a schematic perspective view of one form of outer wrapping and tightening means for use in the system of Figure 1.

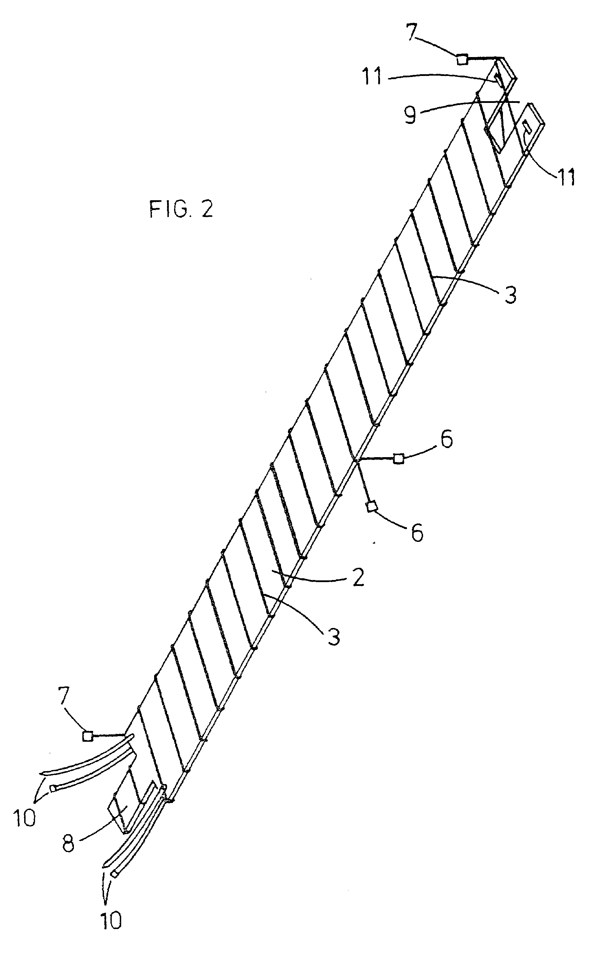

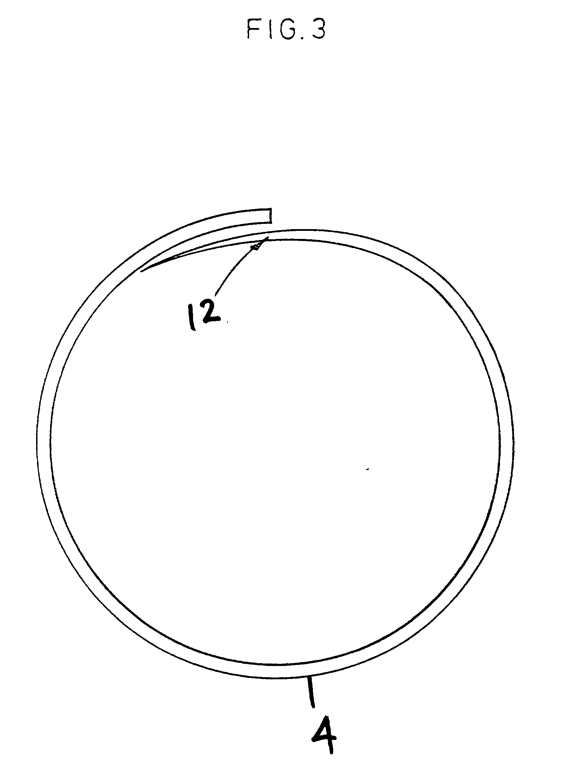

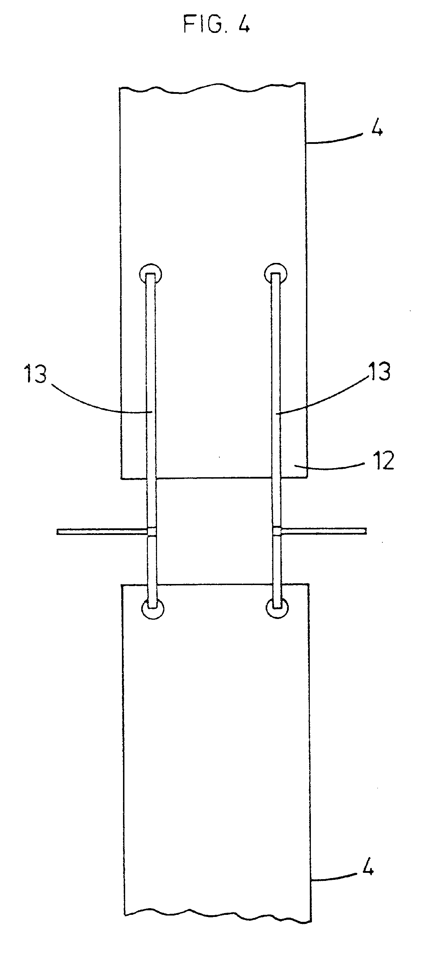

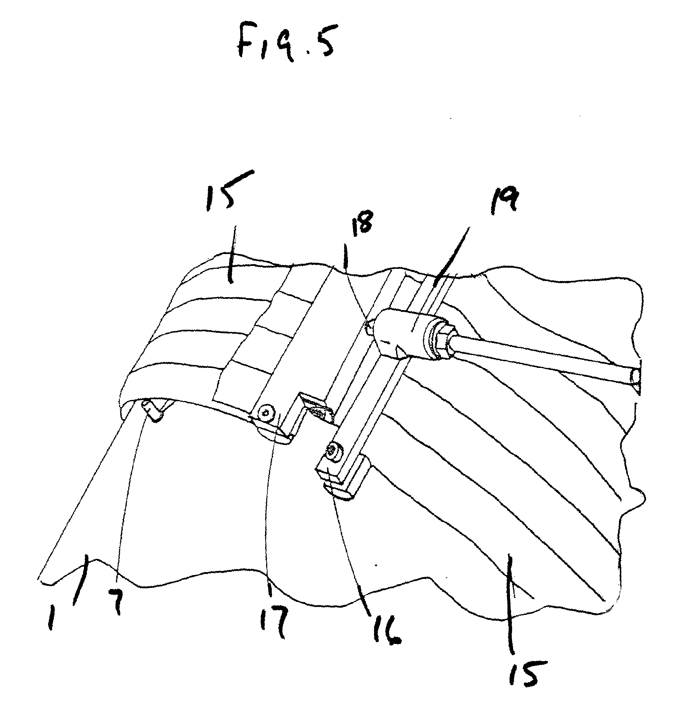

In Figure 1 is illustrated schematically a jointing system for large diameter plastics pipes, particularly for diameters in excess of 400mm. At the abutting ends of plastics pipes 1 and strip 2 of plastics material is provided, wound with wire 3 as is discussed in relation to Figure 2, and around the wound strip 2 is a containment strip 4, as is discussed in relation to Figures 3 and 4. Around the containment strip 4, an outer wrapping 5 is provided, as is discussed in relation to Figure 5.

With the assembly in tight engagement around the pipe ends, current supplied by mains or by a generator, limited to a required level by a transformer means (not shown) causes the wound strip 2, the outer surfaces of the pipe ends 1 and the inner surface of the containment strip 4 to melt to create, on cooling, a homogenous leak-free joint between the pipe ends, that is in hoop form providing substantial rigidity at the joint able to resist both external and internal stresses.

As is illustrated in Figure 2, the strip 2 has two wire windings 3 each extending from connectors 6 located mid point of the strip, to connectors 7 at respective opposite ends of the strip. With the connectors 6 and 7 of each winding connected to a common source of electrical supply, the result is that the potential difference between the windings at the connecting ends of the strip is substantially zero, thereby eliminating any realistic possibility of a short circuit should bared wires of the windings come into contact during the assembly of the jointing system.

As can be seen from Figure 2, one end of the strip 2 has a tongue 8 to fit a recess 9 in the strip at the opposite ends, and banding straps 10 are attached to the strip adjacent the tongue, to engage slots 11 in the opposite end of the strip adjacent the recess. Thus, with the strip wrapped around abutting ends of pipe lengths, the banding straps can engage the slots 11, to allow the tongue 8 to be pulled tight into the recess 9, by a relatively conventional banding strap tightening tool.

As is illustrated in Figure 3, the containment strip 4 has a length greater than the diameter of the pipes 1, and has one end 12 of reduced thickness, as is shown in Figure 4. In similar manner to the wound strip, the containment strip 4 has banding clamps 13 able to engage cooperating holes 14 in the containment strip with the end of reduced thickness overlying the other end, or located below the other end, a conventional banding strap tightening tool can be used to pull the containment strip into tight engagement around the wound strip, with the guarantee that the winding 3 on the strip 2 is totally overlaid.

To provide the further guarantee of tight, abutting engagement of the wound strip on the pipe ends and the containment strip on the wound strip, the outer wrapping 5 is provided of a flexible, heat-resistant material. As is indicated schematically in Figure 1, a ratcheting mechanism 15 can be provided on one end of the outer wrapping to be engaged by the opposite end of the outer wrapping or, as is illustrated in Figure 5, fixators 16,17, can be provided on the ends of the outer wrapping with a drivable screwed stem 18 extending through a housing 19 on the fixator 16 and into a threaded bore in the fixator 17.

By other such means, the outer wrapping can be tightened onto the assembly of wound strip and containment strip to ensure ultimate contact between them and the pipe ends during the application of current. Once the joint has been produced and cooled, the outer wrapping can be removed for its re-use.

## Claims

1. A jointing system for plastics pipes, **characterised by** a strip (2) of plastics material wound with a resistance wire (3) and a containment strip (4) of a compatible plastics material.

2. A jointing system as in Claim 1, **characterised in that** the resistance wire (3) has a coating of a compatible material.

3. A jointing system as in Claim 1 or Claim 2, **characterised in that** the ends of the strip (2) connect to each other after the manner of a strap.

4. A jointing system as in Claims 1 to 3, **characterised in that** the ends of containment strip (4) connect to each other after the manner of a strap.

5. A jointing system as in Claim 1 or Claim 2, **characterised in that** either or both of the strip (2) and containment strip (4) have their ends connected by band clamps looped through respective holes or slots in the adjacent ends of the strips (2, 4).

6. A jointing system as in any of Claims 1 to 5, **characterised in that** an outer wrapping (5) of a flexible, heat-resistant material is provided to overlay the containment strip (4), the outer ends of the outer wrapping being connected together by way of a tightening mechanism.

7. A jointing system as in any of Claims 1 to 6, **characterised in that** the strip (2) has a tongue (8) at one end to engage in a recess (9) at the other end.

8. A jointing system as in any of Claims 1 to 7, **characterised in that** the containment strip (4) has one end (12) of reduced thickness to overlay or be overlaid, by the opposite end.

9. A wound plastics strip (2) for use in the jointing system of Claim 1, **characterised in that** the plastics strip has two windings of wire (3), one extending from a connection (6) at the approximate mid-length of the strip to a connection (7) at one end of the strip and the other extending from a connection (6) at the approximate mid-length of the strip to the other end.
